# FASCICULE DE BREVET EUROPEEN

(11) **EP 4 127 540 B1**
(45) Date de publication et mention de la délivrance du brevet: **24.04.2024**
(21) Numéro de dépôt: 21720809.9
(22) Date de dépôt: 26.03.2021
(51) Int. Cl.: F16L 23/18, F16L 23/08

(54) **SYSTÈME DE SERRAGE POUR LE RACCORDEMENT DE TUBES, COMPRENANT UN COLLIER ET UN JOINT D'ÉTANCHÉITÉ**
SPANNSYSTEM ZUM VERBINDEN VON ROHREN MIT EINEM BUND UND EINER DICHTUNG
CLAMPING SYSTEM FOR CONNECTING TUBES, COMPRISING A COLLAR AND A SEAL

(30) Priorité: 03.04.2020 FR 2003382
(43) Date de publication de la demande: 08.02.2023
(73) Titulaire: Caillau, 92130 Issy-les-Moulineaux (FR)
(72) Inventeur: ZINBI, Abdelfettah, 41200 ROMORANTIN-LANTHENAY (FR); MINET, Quentin, 36600 VILLENTROIS (FR); MESNARD, Eric, 41250 TOURS EN SOLOGNE (FR)
(74) Mandataire: Cabinet Beau de Loménie
(86) Numéro de dépôt international: PCT/FR2021/050543
(87) Numéro de publication internationale: WO 2021/198603

(56) Documents cités:
- EP-A1- 1 451 498
- EP-A1- 2 598 785
- EP-A1- 3 232 107
- WO-A2-03/002306
- US-A- 4 185 858

## Description

### Domaine Technique

L'exposé se rapporte à un système de serrage pour le raccordement d'un premier et d'un deuxième tube dont les extrémités en regard présentent des surfaces d'appui faisant saillie par rapport à la surface extérieure cylindrique desdits tubes, le système comprenant un collier et un joint d'étanchéité, le collier pouvant être serré autour des surfaces d'appui des tubes.

### Technique antérieure

On connaît par les brevets EP 1 451 498, EP 2 598 785 et EP 3 232 107, des systèmes de serrage comprenant un collier qui présente une ceinture apte à être serrée par réduction de son diamètre et un joint d'étanchéité pré-monté dans le collier. Plus précisément, ce système comprend une rondelle qui comprend une partie annulaire fermée formant le joint d'étanchéité et des pattes reliant ce joint d'étanchéité au collier. Le joint d'étanchéité annulaire fermé est initialement maintenu par rapport à la ceinture du collier de sorte qu'un espace soit ménagé entre le joint d'étanchéité et la périphérie interne de la ceinture, de manière à permettre l'engagement de l'extrémité d'un tube entre le joint d'étanchéité et la ceinture. Ensuite, le tube interne est lui-même engagé de manière à venir au contact du joint d'étanchéité. Ce dispositif est particulièrement adapté au serrage de deux tubes emmanchés ensemble et présentant des surfaces en saillie radiale servant d'appui pour un collier de serrage qui comprend un renfoncement pouvant loger ces surfaces en saillie radiale, le joint annulaire fermé ayant lui-même une forme adaptée à ces surfaces en saillie.

En particulier, un tel joint d'étanchéité peut être réalisé dans un métal de type acier inoxydable, ainsi que la ceinture du collier.

On connaît par ailleurs, par le brevet US 4,185,858, un système de serrage comprenant un collier de serrage, ainsi qu'un joint en deux parties. Ce joint comprend une rondelle métallique de support, ainsi qu'un bourrelet compressible en caoutchouc siliconé, collé dans la rondelle. Seul le bourrelet a pour fonction d'assurer une étanchéité, tandis que la rondelle sert seulement de support pour ce bourrelet.

### Exposé de l'invention

Pour certaines applications, en particulier dans le domaine de l'automobile, notamment pour les lignes d'échappement de moteurs à combustion, il existe un besoin pour améliorer les joints d'étanchéité du type précité, pour qu'ils puissent résister à des températures de plus en plus élevées. En effet, la technologie évoluant, il peut arriver que la température des tubes et, en particulier, celle de leurs parties en contact avec le joint d'étanchéité, atteigne plusieurs centaines de degrés, par exemple 900°C voire davantage. Cependant, à de telles températures combinées à des contraintes de serrage élevées, le matériau métallique du joint peut perdre une partie de son élasticité, nécessaire au maintien de l'étanchéité. Des joints métalliques plus épais pourraient assurer une étanchéité à températures et à contraintes de serrage élevées, mais de tels joints sont coûteux, lourds et peu performants à froid. Ainsi, si le système de serrage est utilisé pour raccorder deux tubes faisant partie de la ligne d'échappement du moteur thermique d'un véhicule, un tel joint épais ne serait guère efficace au démarrage du moteur.

L'exposé vise à remédier au moins substantiellement aux inconvénients précités.

Ainsi, l'exposé concerne un système de serrage pour le raccordement d'un premier et d'un deuxième tube dont les extrémités en regard présentent des surfaces d'appui faisant saillie par rapport à la surface extérieure cylindrique desdits tubes, le système comprenant un collier pouvant être serré et un joint d'étanchéité, le collier comportant une ceinture apte à coopérer avec lesdites surfaces d'appui par sa périphérie intérieure délimitant un renfoncement dans lequel les surfaces d'appui peuvent être insérées, le joint d'étanchéité étant supporté par le collier à l'état non serré de ce dernier et comprenant une partie annulaire d'étanchéité, qui comprend une rondelle métallique et une rondelle à base non métallique fixée à la rondelle métallique. La rondelle à base non métallique est formée dans un matériau composite.

Optionnellement, la rondelle métallique porte des pattes de support par lesquelles ladite rondelle métallique et ladite rondelle à base non métallique sont supportées par rapport au collier.

Optionnellement, au moins certaines des pattes de support sont formées en une seule pièce avec la rondelle métallique.

Optionnellement, la rondelle métallique présente une surface tronconique emboutie et la rondelle à base non métallique est formée dans un anneau plan, déformé pour épouser la forme tronconique de la surface tronconique.

Optionnellement, la rondelle à base non métallique est collée à la rondelle métallique.

Optionnellement, la rondelle métallique porte des pattes de retenue coopérant avec la rondelle à base non métallique pour retenir ladite rondelle à base non métallique par rapport à la rondelle métallique.

Optionnellement, les pattes de retenue sont découpées dans la rondelle métallique.

Optionnellement, la rondelle à base non métallique est formée dans matériau à base de mica.

Optionnellement, la rondelle à base non métallique comprend des particules minérales, en particulier du mica ou du graphite, et un liant.

Optionnellement, la rondelle à base non métallique comprend une armature, en particulier une armature métallique.

Optionnellement, la rondelle métallique présente un renflement annulaire sur une première face de ladite rondelle métallique et la rondelle à base non métallique est disposée contre ladite première face.

Optionnellement, la rondelle à base non métallique présente un renflement annulaire sur une première face de ladite rondelle à base non métallique et lesdites premières faces de la rondelle métallique et de la rondelle à base non métallique sont disposées l'une contre l'autre, de sorte que les renflements annulaires soient en contact.

Optionnellement, la rondelle à base non métallique présente également un renflement annulaire sur sa deuxième face et lesdits renflements annulaires de la rondelle à base non métallique délimitent optionnellement entre eux un espace annulaire.

Optionnellement, la partie annulaire d'étanchéité comprend en outre une rondelle à base non métallique supplémentaire fixée à la rondelle métallique, de sorte que la rondelle métallique soit située entre la rondelle à base non métallique et la rondelle à base non métallique supplémentaire.

Selon l'exposé, le joint d'étanchéité du système de serrage comprend donc deux rondelles, l'une métallique et l'autre à base non métallique, qui sont fixées ensemble. L'ensemble de ces deux rondelles peut être porté par rapport au collier à l'aide d'une configuration adaptée du joint d'étanchéité. La partie nécessaire à l'étanchéité, à savoir la partie annulaire d'étanchéité qui comprend la rondelle métallique et la rondelle à base non métallique, peut être aisément conformée de manière à répondre au besoin température concernés. Cette partie annulaire d'étanchéité est destinée à être disposée entre les surfaces en regard des tubes raccordés à l'aide du système de serrage, et à être serrée par pincement entre ces surfaces, lors du serrage du collier. En particulier, la rondelle à base non métallique peut comprendre un matériau adapté à conserver une déformabilité élastique à haute température et à contribuer à une étanchéité sur de larges plages de température et de contraintes, en particulier un matériau à base de mica. Le joint d'étanchéité peut être léger, la partie de rondelle métallique conférant sa tenue et sa résistance mécanique, la partie à base non métallique contribuant à son efficacité notamment pour des plages élevées de température et de pression.

### Brève description des dessins

[Fig. 1] La figure 1 est une vue en perspective d'un système de serrage selon le présent exposé prise d'un premier côté.
[Fig. 2] La figure 2 est une vue en perspective du système représenté sur la figure 1, prise de l'autre côté.
[Fig. 3] La figure 3 est une vue en perspective éclatée montrant différents éléments constitutifs du système de serrage représentés séparément, ainsi que les extrémités de deux tubes devant être assemblés à l'aide de ce système.
[Fig. 4] La figure 4 est une vue en coupe axiale dans le plan IV de la figure 1 montrant, d'une part, le système de serrage selon l'exposé et, d'autre part, les extrémités de deux tubes devant être assemblés à l'aide de ce système de serrage.
[Fig. 5] La figure 5 est une vue agrandie du détail V de la figure 1.
[Fig. 6] La figure 6 est une vue agrandie du détail VI de la figure 2.
[Fig. 7] La figure 7 est une vue du détail VII de la figure 4.
[Fig. 8] La figure 8 est une vue en coupe axiale partielle prise comme celle de la figure 4, pour une variante de réalisation.
[Fig. 9] La figure 9 est une vue partielle en perspective montrant une variante pour le joint d'étanchéité.

### Description des modes de réalisation

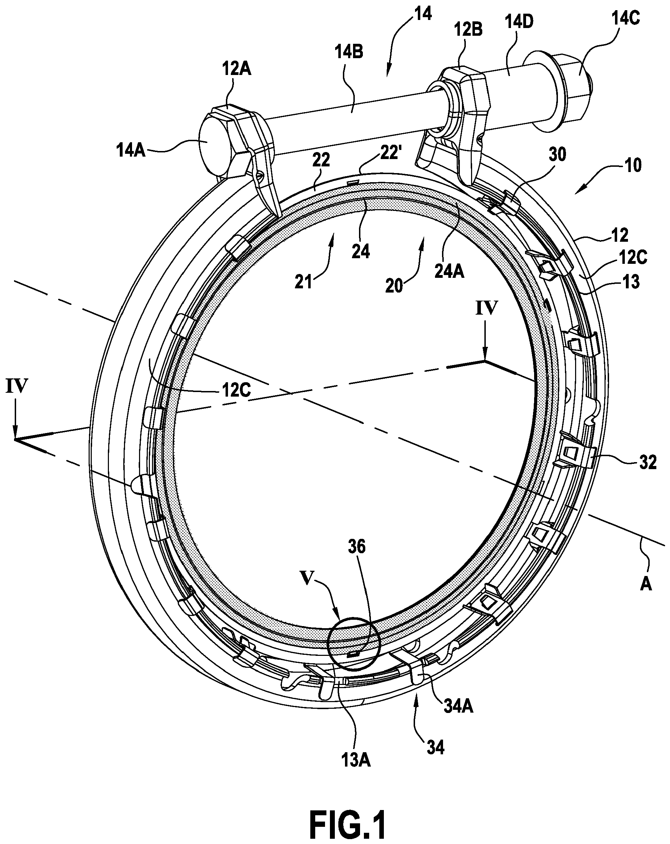

La figure 1 montre un collier de serrage 10 comprenant une ceinture 12 dont les extrémités sont relevées radialement de manière à former des pattes de serrage respectivement 12A et 12B. Pour serrer le collier, le diamètre de la ceinture est réduit par coopération d'une vis de serrage 14 avec les pattes de serrage 12A et 12B. Le fût 14B de la vis traverse des perçages des pattes de serrage, sa tête 14A coopérant avec la patte 12A et l'extrémité opposée étant pourvue d'un écrou 14C coopérant avec la patte 12B en l'espèce via une entretoise 14D.

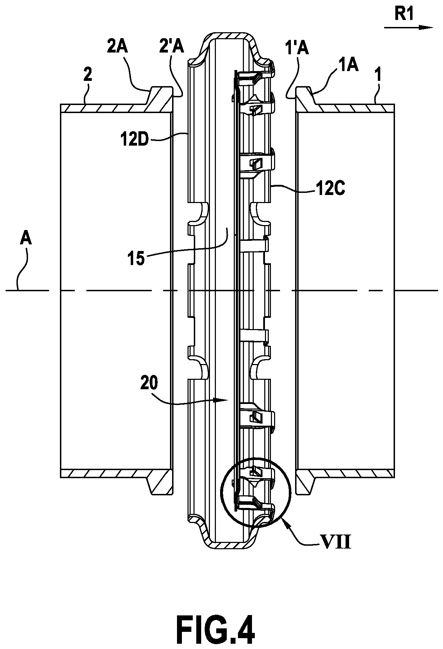

La ceinture 12 présente un renfoncement interne 15 (mieux visible sur la figure 4) ménagé entre deux flancs, respectivement 12C et 12D, de cette ceinture. Un joint d'étanchéité 20 est disposé à l'intérieur de la ceinture. Comme on le voit mieux sur la figure 4, le système de serrage sert à raccorder deux tubes 1 et 2 dont les extrémités sont pourvues de surfaces d'appui 1A et 2A. Pour raccorder les tubes, leurs extrémités sont rapprochées jusqu'à se trouver axialement dans le renfoncement 15, et le diamètre de la ceinture est réduit de sorte que les flancs 12C et 12D viennent se serrer contre les surfaces d'appui 1A et 2A. En l'espèce, les surfaces d'appui 1A et 2A sont formées sur de collerettes radiales que présentent les extrémités des tubes 1 et 2. Comme indiqué, le joint d'étanchéité 20 est disposé à l'intérieur du collier. Pour le raccordement des tubes 1 et 2, les surfaces avant 1'A et 2'A des extrémités des tubes 1A et 2A viennent se placer de part et d'autre d'une partie annulaire d'étanchéité 21 que présente le joint 20.

Au sens du présent exposé, le sens vers l'avant, pour le tube 1 ou 2, est le sens allant vers l'autre tube 2 ou 1 lorsque leurs extrémités sont rapprochées pour assembler les tubes. Ainsi, les surfaces d'appui 1A et 2A sont formées sur les faces arrière des collerettes radiales que présentent les extrémités des tubes. Le sens vers l'arrière est évidemment le sens opposé. Pour un élément, le sens vers l'intérieur, est celui va vers l'axe A. Le sens vers l'extérieur est opposé.

Cette partie annulaire d'étanchéité comprend une rondelle métallique 22 et une rondelle à base non métallique 24 fixée à la rondelle métallique. En l'espèce, ainsi qu'on le comprend en considérant ensemble les figures 1, 2 et 3, la partie annulaire d'étanchéité comprend la rondelle métallique 22, la rondelle à base non métallique 24 disposée sur une première face de la rondelle métallique et une autre rondelle à base non métallique 26 disposée sur l'autre face de la rondelle métallique. Ainsi, la rondelle métallique 22 est prise en sandwich entre les rondelles à base non métallique 24 et 26.

Par exemple, la rondelle métallique 22 peut être fabriquée dans le même métal que la ceinture 12, par exemple en acier inoxydable. La ou les rondelles à base non métallique dans un matériau à base de mica. La ou les rondelles à base non métallique peuvent comprendre des particules minérales, en particulier du mica ou du graphite, et un liant. La ou les rondelles à base non métallique peuvent comprendre une armature, en particulier une armature métallique, supportant du matériau non métallique, en particulier un matériau composite à base de mica ou de graphite. Par exemple, l'armature peut être un fin treillis métallique.

L'indication selon laquelle la rondelle 24 ou 26 est "à base non métallique" signifie que cette rondelle ne comporte pas de métal ou que, si elle comporte du métal, par exemple une armature métallique, le métal ne représente en masse qu'une partie minoritaire de cette rondelle, par exemple la masse de métal ne représente pas plus de 40% de celle de la rondelle, en particulier pas plus de 20 ou 30%.

La ou les rondelles à base non métallique 24 et 26 sont portées par la rondelle métallique 22. Ainsi qu'on le voit sur les figures 1 à 3, cette rondelle métallique 22 porte des pattes de support par lesquelles la rondelle métallique et la rondelle à base non métallique sont supportées par rapport au collier 10. Le joint d'étanchéité est ainsi prémonté dans la ceinture, c'est-à-dire que, avant la mise en place du collier sur les tubes et son serrage, le joint d'étanchéité est porté par le collier de sorte que le collier et le joint peuvent être manipulés comme un ensemble.

Par ailleurs, la rondelle métallique peut également porter des pattes de support servant au prémontage du collier équipé de la rondelle sur l'un des tubes devant être assemblés. Ainsi, l'ensemble formé par le collier et le joint d'étanchéité peut être disposé à l'extrémité de l'un des tubes et rester en place à cette extrémité, avant la mise en place de l'extrémité de l'autre tube et le serrage du collier. Les mêmes pattes peuvent avoir la double fonction de servir au prémontage du joint d'étanchéité dans la ceinture et au prémontage de l'ensemble formé par le collier et le joint à l'extrémité de l'un des tubes. Ces pattes de support sont portées par la périphérie externe (éloignée de l'axe A de la ceinture), de la rondelle métallique 22.

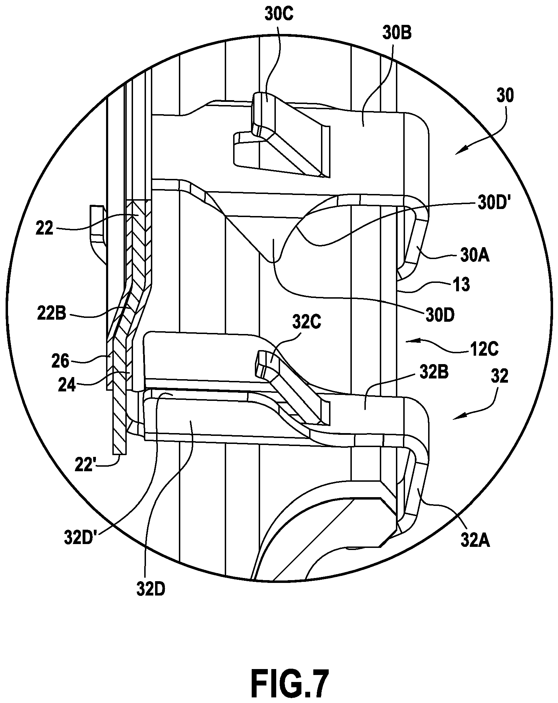

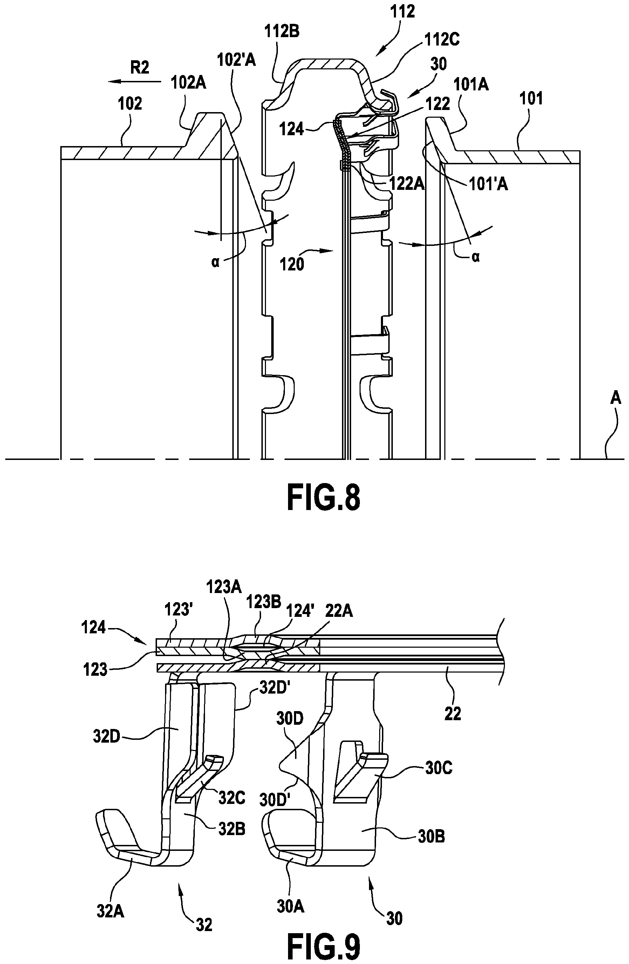

En l'espèce, on a représenté trois types de pattes différentes. Comme on le voit mieux sur les figures 7 et 9, les pattes de support 30 présentent des extrémités 30A recourbées en crochet de manière à pouvoir s'accrocher sur le bord 13 du flanc 12C de la ceinture 12. Entre leur zone de raccordement à la périphérie externe 22' de la rondelle métallique 22 et ce crochet 30A, ces pattes 30 présentent un tronçon axial 30B qui s'étend sensiblement axialement, c'est-à-dire sensiblement parallèlement à l'axe A. languette d'accrochage 30C qui est découpée dans le tronçon axial 30B et repliée radialement vers l'intérieur en s'étendant vers son extrémité libre, dans le sens allant du crochet 30A à la périphérie externe 22' de la rondelle métallique 22. Cette languette 30C sert à agripper la rondelle sur la surface d'appui 1A du tube 1 pour retenir le collier prémonté à l'extrémité de ce tube. On voit que l'orientation de ces languettes 30C évite que le tube ne puisse être dégagé de la rondelle dans le sens vers l'arrière pour ce tube 1, selon la flèche R1 indiquée sur la figure 4.

Par ailleurs, les pattes de support 30 présentent des ailes 30D qui, à partir des bords longitudinaux des tronçons axiaux 30B, sont repliées radialement vers l'extérieur, c'est-à-dire de manière à s'éloigner de l'axe A. Par ailleurs, ces ailes 30D présentent un bord de retenue 30D' dirigé vers la face interne du crochet 30A et donc vers la face interne du flanc 12C de la ceinture 12 lorsque le joint d'étanchéité est prémonté dans la rondelle. Ces bords de retenue 30D' sont espacés des faces internes des crochets 30A. Le bord 13 du flanc 12C vient se loger dans l'espace ainsi ménagé entre le crochet 30A et le bord de retenue 30D. Ceci permet de maintenir la rondelle métallique 22 par rapport à la ceinture du collier en la retenant dans les deux sens axiaux.

Les pattes de support comprennent par ailleurs des pattes 32 qui présentent également des crochets 32A à leurs extrémités libres opposées à leurs zones de rattachement à la périphérie externe 22' de la rondelle 22. Ces pattes 32 comprennent également des tronçons axiaux 32B qui s'étendent sensiblement axialement entre le rattachement de ces pattes à la rondelle 22 et les crochets 32A. Ces pattes 32 présentent également des languettes d'accrochage 32C analogues aux languettes 30C précédemment décrites. Enfin, ces pattes 32 comprennent également des ailes 32D qui sont cependant orientées à l'inverse des ailes 30D précitées. En effet, les ailes 32D sont repliées radialement vers l'intérieur à partir des bords longitudinaux des tronçons axiaux 32B. Ces ailes 32D présentent des bords longitudinaux 32D' qui contribuent à la retenue prémontée du collier sur l'extrémité du tube 1 en retenant la rondelle par rapport au tube vis-à-vis de débattements radiaux.

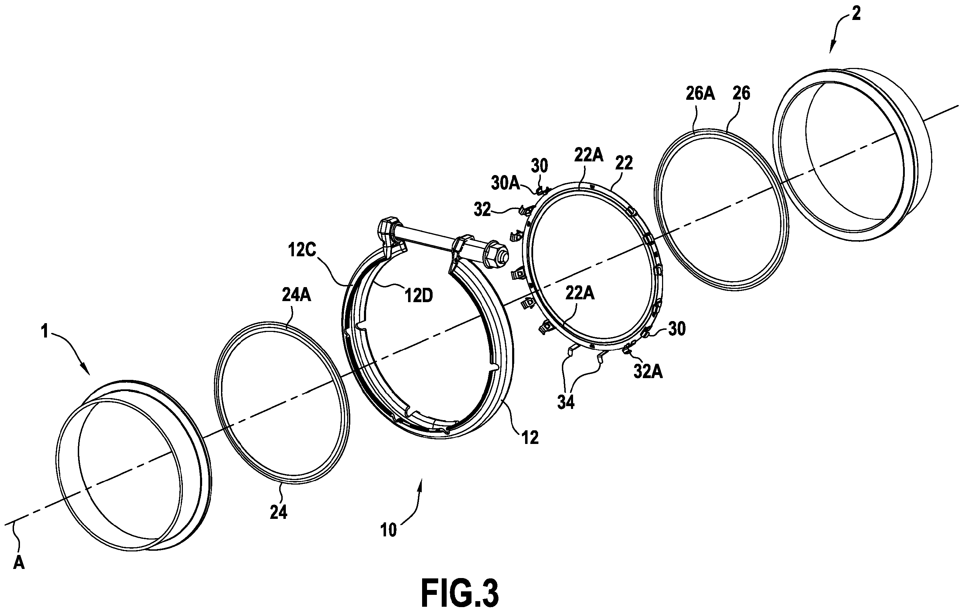

La rondelle métallique présente encore des pattes 34 qui, comme on le voit sur les figures 1 et 3, présentent des crochets 34A à leurs extrémités libres opposées à la périphérie externe 22' de la rondelle 22 et des tronçons axiaux qui s'étendent à partir de cette rondelle jusqu'à ces crochets. Ces pattes servent au calage angulaire de la rondelle par rapport à la ceinture, les crochets 34A étant engagés dans des Globalement, les pattes de support 30 et les pattes de support 32 sont disposées en alternance sur la périphérie externe de la rondelle 22. Ces pattes 30 et 32 servent à l'accrochage sur le bord 13 du flanc 12C de la ceinture 12 en empêchant le joint d'étanchéité de se déplacer par rapport à la ceinture dans le sens opposé au sens R1 indiqué sur la figure 4. Les ailes 30D servent à retenir la rondelle par rapport à la ceinture en limitant son déplacement dans le sens R1 par rapport à la ceinture. Ces pattes, ainsi que les pattes 32 présentent également les languettes 30C ou 32C servant à retenir l'extrémité du tube à l'intérieur de la rondelle. Les pattes 32 présentent en outre les ailes 32D servant à centrer le tube par rapport à la rondelle.

Comme on le voit notamment sur la figure 3, les pattes de support 30 et 32 sont formées en une seule pièce avec la rondelle métallique. En fait, cette rondelle métallique est formée en une seule pièce à partir d'un feuillard, par découpe, emboutissage et pliage.

Dans l'exemple représenté sur les figures 1 à 4, la rondelle métallique 22 et les rondelles non métalliques 24 et 26 sont sensiblement planes. En effet, les faces avant 1'A et 2'A des collerettes sur lesquelles sont formées les surfaces d'appui des tubes 1 et 2 sur lesquelles sont orientées radialement.

Cependant, comme indiqué par exemple dans les brevets EP 1 451 498, EP 2 598 785 ou encore EP 3 232 107, le collier peut être prémonté sur des tubes dont les surfaces d'appui sont tronconiques. Dans ce cas, comme on le voit sur la figure 8, la rondelle métallique 122 peut présenter une surface tronconique, en particulier une surface tronconique emboutie. Sur la coupe de la figure 8, on voit le joint d'étanchéité 120 avec la rondelle 122 et des pattes 30, 32 et 34, analogues aux pattes précédemment décrites. Cette ceinture 112 est analogue à la ceinture 12, à ceci près que ses flancs 112C et 112B peuvent être inclinés comme les branches d'un V, adaptées à l'évasé des tubes 101 et 102. En effet, la surface d'appui 101A du tube 101 présente une forme tronconique formant un évasé, et la surface d'appui 102A du tube 102 présente une face avant 102'A, qui forme également une surface tronconique de manière à être adaptée à l'évasé précité. La surface d'appui 102A formée à l'arrière dans le sens R2 par rapport à la portion tronconique 102'A, est également tronconique dans le sens opposé, sensiblement parallèle au flanc 112B de la ceinture 112. Comme indiqué, la rondelle métallique présente une surface tronconique emboutie 122A, adaptée aux formes des surfaces 101'A et 102'A des tubes dont le raccordement doit être étanchée formée dans un anneau plan qui est déformé pour épouser la forme tronconique de la surface tronconique de la rondelle métallique 122.

Etant en matériau à base non métallique, cette rondelle 124 ne peut pas toujours être emboutie. Il peut être intéressant de la former à partir d'une plaque plane pour des raisons de coût de fabrication. Cependant, dans une certaine mesure, une rondelle initialement plane (fabriquée à plat) à base non métallique peut être déformée pour épouser la forme tronconique de la surface 122A de la rondelle 122.

L'angle α que forment les surfaces tronconiques précitées des tubes par rapport à la direction perpendiculaire à l'axe A est par exemple de l'ordre de 20 degrés maximum pour une rondelle initialement plane à base non métallique. On peut en revanche avoir un angle α plus élevé, par exemple de l'ordre de 45°, en utilsant une rondelle à base non métallique qui ne soit pas initialement plane, mais soit conformée en conséquence, par exemple par chauffage en particulier lorsqu'il s'agit d'une rondelle comprenant un liant thermoformable.

La rondelle à base non métallique 24 peut, contrairement à la rondelle métallique 22, être purement annulaire, en étant dépourvue de pattes de fixation ou autres. La rondelle à base non métallique est portée par la rondelle métallique 22. Elle peut lui être fixée de différentes manières. Par exemple, elle peut être fixée à la rondelle métallique par collage. Le collage peut concerner l'intégralité de la surface de contact entre les rondelles 22 et 24, ou bien être au contraire être réalisé par un cordon continu ou discontinu de collage présentant une surface moindre. Par exemple, une colle de type cyanoacrylate peut être utilisée. Cette colle peut en particulier se vaporiser à hautes températures telles que celles auxquelles peut être soumis le système de serrage utilisé dans une ligne d'échappement d'un moteur à combustion. La colle peut être appliquée lors de l'assemblage des rondelles, ou bien être préalablement apposée sur la rondelle à base non métallique à la manière d'un adhésif, éventuellement recouvert par un film pelable.

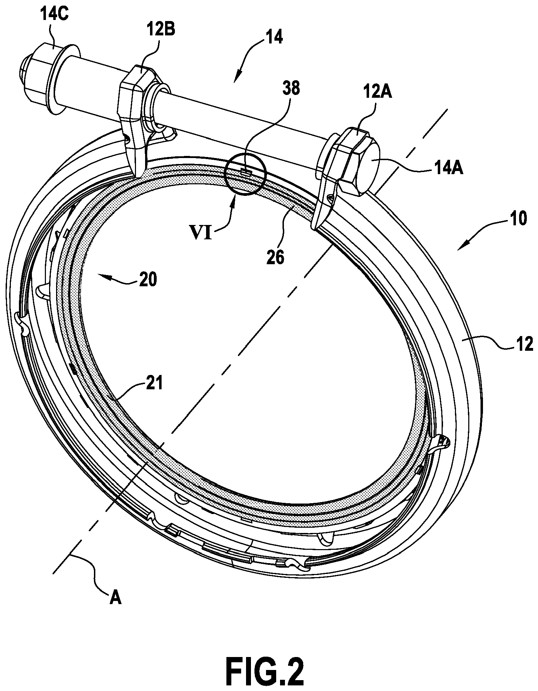

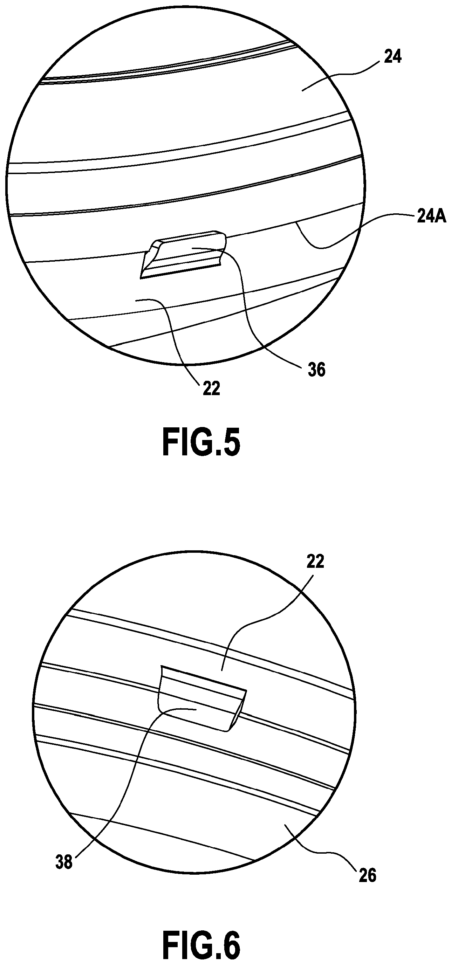

La rondelle à base non métallique 24 peut être supportée par la rondelle métallique 22 par des moyens purement mécaniques ne faisant pas appel à un matériau extérieur comme de la colle. Ainsi, la rondelle métallique peut porter des pattes de retenue qui coopèrent avec la rondelle à base non métallique pour la retenir par rapport à la rondelle métallique. Ainsi, sur les figures 1 et 5, on voit que la rondelle métallique 22 présente des pattes 36 qui sont formées par des découpes de cette rondelle sont orientées vers l'axe A. Ces pattes de retenue 36 servent ainsi à caler et retenir la rondelle à base non métallique 24 en coopérant avec son bord radial externe 24A. De même, comme on le voit sur les figures 2 et 6, la rondelle métallique 22 présente des pattes de retenue 38 qui sont analogues aux pattes de retenue 36 mais sont orientées de l'autre côté axialement pour retenir la rondelle à base non métallique 26 située sur l'autre face de la rondelle 22.

Dans cet exemple, les pattes de retenue 36 ou 38 retiennent les rondelles 24 ou 26 par leurs bords radiaux externes. On pourrait bien entendu prévoir des pattes analogues mais servant à retenir ces rondelles par leurs bords radiaux internes ou une combinaison de pattes coopérant avec les bords radiaux internes et les bords radiaux externes des rondelles 24 et 26.

La rondelle métallique 22 peut présenter un renflement annulaire ou, de manière générale, un relief annulaire lui conférant une capacité de déformation axiale. Par exemple, sur la figure 3, on voit que la rondelle 22 présente un bourrelet annulaire 22A en saillie sur l'une de ses faces, contre laquelle est disposée la rondelle à base non métallique 24. La rondelle à base non métallique 24 ou 26 peut quant à elle être parfaitement plane. Elle peut également présenter un renflement annulaire 24A, en particulier dont la convexité peut être inversée par rapport à celles du renflement annulaire 22A de la rondelle 22 et dont les dimensions diamétrales correspondent à celles du renflement 22A. Dans ce cas, lorsque la rondelle 24 est assemblée à la rondelle 22, leurs renflements respectifs peuvent donc être en contact par leurs faces convexes, ce qui est une façon de permettre des déformations axiales des rondelles sous les efforts de serrage dans les zones des renflements pour assurer une bonne étanchéité. La rondelle 26 peut quant à elle présenter un renflement annulaire 26A qui peut avoir une convexité de sens analogue à celui du renflement annulaire 22A de manière à venir "s'encastrer" en partie dans ce renflement, auquel cas ce sont plutôt les zones des rondelles autres que les renflements qui pourront être déformées sous les efforts de serrage. Ces renflements peuvent aussi être de sens opposé. Ainsi, si l'on considère les rondelles 22 et 24 qui viennent d'être décrites, on voit qu'elles présentent chacune un renflement annulaire sur leurs premières faces respectives disposées l'une contre l'autre, de sorte que ces renflements annulaires soient en contact. On pourrait prévoir une situation inverse, avec le renflement annulaire 22A de la rondelle 22 orienté à l'opposé, c'est-à-dire dans le sens formant un creux du côté de la rondelle à base non métallique 24 et avec la rondelle à base non métallique 24 présentant un renflement annulaire en saillie du côté opposé à la rondelle 22 de sorte que sa concavité est tournée vers la rondelle 22. Ainsi, les deux renflements annulaires sont disposés sur des faces opposées des rondelles et, lorsqu'elles sont associées, les renflements annulaires respectifs délimitent entre eux un espace annulaire en creux. Ceci est une autre manière de favoriser la déformabilité axiale des rondelles pour favoriser l'étanchéité.

Sur la figure 9, on voit un exemple dans lequel la rondelle à base non métallique 124 est en fait formée de deux rondelles élémentaires, respectivement 123 et 123' fixées ensemble, par exemple par collage. Chacune de ces rondelles élémentaires 123 et 123' présente un renflement annulaire, respectivement 123A et 123B. Ainsi, la rondelle 124 présente un renflement annulaire non seulement sur sa première face tournée vers la rondelle métallique 22, mais également sur la deuxième face opposée. Les renflements annulaires 123A et 123B sont disposés sur de mêmes dimensions diamétrales de manière à ménager entre eux un espace annulaire 124'. On voit également sur la figure 9 que la rondelle métallique 22 présente un renflement annulaire 22A en saillie sur sa première face contre laquelle est disposée la rondelle 124, de sorte que les renflements annulaires 22A et 123A soient disposés l'un contre l'autre.

Au lieu d'un renflement annulaire purement convexe, la rondelle métallique 22 peut présenter une vague ou déformation formant un léger pli de sorte que les bords radiaux interne et externe de la rondelle métallique soient légèrement espacés axialement. C'est ce que l'on voit par exemple sur la figure 7, sur laquelle la rondelle métallique 22 présente un tel léger pli 22B. Les rondelles à base non métallique 24 et 26 disposées de part et d'autre de la rondelle métallique 22 peuvent être initialement planes et être déformées pour s'adapter à ce pli lors du serrage du collier, ou bien présentent initialement de tels plis.

Les reliefs, plis ou renflements de la rondelle à base non métallique (ou des rondelles élémentaires) peuvent être réalisés par tous moyens appropriés, par exemple par une conformation à chaud, en particulier lorsque le matériau dans lequel est réalisée cette rondelle comporte un liant thermoformable.

L'épaisseur de la rondelle métallique 22, mesurée axialement entre les deux faces de cette dernière dans une zone dans laquelle aucun renflement n'est présent, est par exemple de l'ordre de 0,2 mm à 0,8 mm, en particulier de l'ordre de 0,2 mm à 0,4 mm. L'épaisseur de la rondelle à base non métallique, mesurée de la même manière, peut être de 50% à 200%, en particulier 120% à 200%, de l'épaisseur de la rondelle métallique.

## Revendications

1. Système de serrage pour le raccordement d'un premier et d'un deuxième tube (1, 2) dont les extrémités en regard présentent des surfaces d'appui (1'A, 2'A) faisant saillie par rapport à la surface extérieure cylindrique desdits tubes, le système comprenant un collier (10) pouvant être serré et un joint d'étanchéité (20), le collier comportant une ceinture (12) apte à coopérer avec lesdites surfaces d'appui par sa périphérie intérieure délimitant un renfoncement (15) dans lequel les surfaces d'appui peuvent être insérées, le joint d'étanchéité étant supporté par le collier à l'état non serré de ce dernier et comprenant une partie annulaire d'étanchéité (21), qui comprend une rondelle métallique (22,122) et une rondelle à base non métallique (24,124) fixée à la rondelle métallique, **caractérisé en ce que** la rondelle à base non métallique (24,124) est formée dans un matériau composite.

2. Système de serrage selon la revendication 1, dans lequel la rondelle métallique (22,122) porte des pattes de support (30,32) par lesquelles ladite rondelle métallique et ladite rondelle à base non métallique (24,124) sont supportées par rapport au collier.

3. Système de serrage selon la revendication 2, dans lequel au moins certaines des pattes de support (30,32) sont formées en une seule pièce avec la rondelle métallique.

4. Système de serrage selon l'une des revendications 1 à 3, dans lequel la rondelle métallique (122) présente une surface tronconique emboutie et la rondelle à base non métallique (124) est formée dans un anneau plan, déformé pour épouser la forme tronconique de la surface tronconique.

5. Système de serrage selon l'une des revendications 1 à 4, dans lequel la rondelle à base non métallique (24,124) est collée à la rondelle métallique (22,122).

6. Système de serrage selon l'une des revendications 1 à 5, dans lequel la rondelle métallique (22,122) porte des pattes de retenue (36) coopérant avec la rondelle à base non métallique (24,124) pour retenir ladite rondelle à base non métallique par rapport à la rondelle métallique.

7. Système de serrage selon la revendication 6, dans lequel les pattes de retenue (36) sont découpées dans la rondelle métallique.

8. Système de serrage selon l'une des revendications 1 à 7, dans lequel la rondelle à base non métallique (24,124) est formée dans matériau à base de mica.

9. Système de serrage selon l'une des revendications 1 à 8, dans lequel la rondelle à base non métallique (24,124) comprend des particules minérales, en particulier du mica ou du graphite, et un liant.

10. Système de serrage selon l'une des revendications 1 à 9, dans lequel la rondelle à base non métallique (24,124) comprend une armature, en particulier une armature métallique.

11. Système de serrage selon l'une des revendications 1 à 10, dans lequel la rondelle métallique (22) présente un renflement annulaire (22A) sur une première face de ladite rondelle métallique et la rondelle à base non métallique (24) est disposée contre ladite première face.

12. Système de serrage selon la revendication 11, dans lequel la rondelle à base non métallique (24, 124) présente un renflement annulaire (24A, 123A) sur une première face de ladite rondelle à base non métallique et lesdites premières faces de la rondelle métallique et de la rondelle à base non métallique sont disposées l'une contre l'autre, de sorte que les renflements annulaires soient en contact.

13. Système de serrage selon la revendication 12, dans lequel la rondelle à base non métallique (124) présente également un renflement annulaire (123B) sur sa deuxième face et lesdits renflements annulaires de la rondelle à base non métallique délimitent optionnellement entre eux un espace annulaire (124').

14. Système de serrage selon l'une des revendications 1 à 13, dans lequel la partie annulaire d'étanchéité (21) comprend en outre une rondelle à base non métallique supplémentaire (26) fixée à la rondelle métallique (22), de sorte que la rondelle métallique soit située entre la rondelle à base non métallique et la rondelle à base non métallique supplémentaire.

## Patentansprüche

1. Klemmsystem für die Verbindung eines ersten und eines zweiten Rohrs (1, 2), deren einander zugewandte Enden Anlageflächen (1'A, 2'A) aufweisen, die in Bezug auf die äußere zylindrische Oberfläche der Rohre wegragen, wobei das System eine Schelle (10), die zusammengeklemmt werden kann, und eine Dichtung (20) umfasst, wobei die Schelle einen Gurtring (12) beinhaltet, der dazu geeignet ist, mit den Anlageflächen durch seinen Innenumfang zusammenzuwirken, der eine Aussparung (15) begrenzt, in welche die Anlageflächen eingesetzt werden können, wobei die Dichtung von der Schelle in deren nicht zusammengeklemmtem Zustand getragen wird und einen ringförmigen Dichtabschnitt (21) umfasst, der eine Metall-Unterlegscheibe (22, 122) und eine Unterlegscheibe (24, 124) auf nichtmetallischer Basis umfasst, die an der Metall-Unterlegscheibe befestigt ist, **dadurch gekennzeichnet, dass** die Unterlegscheibe (24, 124) auf nichtmetallischer Basis aus einem Verbundmaterial gebildet ist.

2. Klemmsystem nach Anspruch 1, wobei die Metall-Unterlegscheibe (22, 122) Haltelaschen (30, 32) trägt, durch welche die Metall-Unterlegscheibe und die Unterlegscheibe (24, 124) auf nichtmetallischer Basis in Bezug auf die Schelle gehalten werden.

3. Klemmsystem nach Anspruch 2, wobei zumindest einige der Haltelaschen (30, 32) mit der Metall-Unterlegscheibe einstückig ausgebildet sind.

4. Klemmsystem nach einem der Ansprüche 1 bis 3, wobei die Metall-Unterlegscheibe (122) eine kegelstumpfförmige eingetiefte Oberfläche aufweist und die Unterlegscheibe (124) auf nichtmetallischer Basis als ein flacher Ring geformt ist, der verformt wird, um sich an die kegelstumpfförmige Form der kegelstumpfförmigen Oberfläche anzupassen.

5. Klemmsystem nach einem der Ansprüche 1 bis 4, wobei die Unterlegscheibe (24, 124) auf nichtmetallischer Basis an die Metall-Unterlegscheibe (22, 122) angeklebt ist.

6. Klemmsystem nach einem der Ansprüche 1 bis 5, wobei die Metall-Unterlegscheibe (22, 122) Sicherungslaschen (36) trägt, die mit der Unterlegscheibe (24, 124) auf nichtmetallischer Basis zusammenwirken, um die Unterlegscheibe auf nichtmetallischer Basis in Bezug auf die Metall-Unterlegscheibe zu sichern.

7. Klemmsystem nach Anspruch 6, wobei die Sicherungslaschen (36) in die Metall-Unterlegscheibe eingeschnitten sind.

8. Klemmsystem nach einem der Ansprüche 1 bis 7, wobei die Unterlegscheibe (24, 124) auf nichtmetallischer Basis aus einem Material auf Basis von Mica gebildet ist.

9. Klemmsystem nach einem der Ansprüche 1 bis 8, wobei die Unterlegscheibe (24, 124) auf nichtmetallischer Basis mineralische Partikel, insbesondere aus Mica oder aus Graphit, und ein Bindemittel umfasst.

10. Klemmsystem nach einem der Ansprüche 1 bis 9, wobei die Unterlegscheibe auf nichtmetallischer Basis (24, 124) eine Bewehrung, insbesondere eine Metall-Bewehrung, umfasst.

11. Klemmsystem nach einem der Ansprüche 1 bis 10, wobei die Metall-Unterlegscheibe (22) eine ringförmige Ausbauchung (22A) auf einer ersten Seite der Metall-Unterlegscheibe aufweist und die Unterlegscheibe (24) auf nichtmetallischer Basis gegen die erste Seite angeordnet ist.

12. Klemmsystem nach Anspruch 11, wobei die Unterlegscheibe (24, 124) auf nichtmetallischer Basis eine ringförmige Ausbauchung (24A, 123A) auf einer ersten Seite der Unterlegscheibe auf nichtmetallischer Basis aufweist, und die ersten Seiten der Metall-Unterlegscheibe und der Unterlegscheibe auf nichtmetallischer Basis gegeneinander angeordnet sind, so dass die ringförmigen Ausbauchungen in Kontakt stehen.

13. Klemmsystem nach Anspruch 12, wobei die Unterlegscheibe (124) auf nichtmetallischer Basis auch eine ringförmige Ausbauchung (123B) auf der zweiten Seite aufweist und die ringförmigen Ausbauchungen der Unterlegscheibe auf nichtmetallischer Basis optional zwischen einander einen ringförmigen Raum (124') begrenzen.

14. Klemmsystem nach einem der Ansprüche 1 bis 13, wobei der ringförmige Dichtabschnitt (21) ferner eine zusätzliche Unterlegscheibe (26) auf nichtmetallischer Basis umfasst, die an der Metall-Unterlegscheibe (22) so befestigt ist, dass die Metall-Unterlegscheibe sich zwischen der Unterlegscheibe auf nichtmetallischer Basis und der zusätzlichen Unterlegscheibe auf nichtmetallischer Basis befindet.

## Claims

1. A clamping system for connecting a first and a second tube (1, 2) whose facing ends have bearing surfaces (1'A, 2'A) protruding relative to the cylindrical external surface of said tubes, the system comprising a clampable collar (10) and a seal (20), the collar including a belt (12) able to cooperate with said bearing surfaces by its internal periphery delimiting a recess (15) into which the bearing surfaces can be inserted, the seal being supported by the collar in the unclamped state of the latter and comprising an annular sealing portion (21), which comprises a metal washer (22, 122) and a non-metal based washer (24, 124) fixed to the metal washer, the non-metal based washer (22, 122) being formed from a composite material.

2. The clamping system according to claim 1, wherein the metal washer (22, 122) carries support lugs (30, 32) by which said metal washer and said non-metal based washer (24, 124) are supported relative to the collar.

3. The clamping system according to claim 2, wherein at least some of the support lugs (30, 32) are formed in one piece with the metal washer.

4. The clamping system according to any of claims 1 to 3, wherein the metal washer (122) has a stamped frustoconical surface and the non-metal based washer (24) is formed in a planar ring, deformed to match the frustoconical shape of the frustoconical surface.

5. The clamping system according to any of claims 1 to 4, wherein the non-metal based washer (24, 124) is bonded to the metal washer (22, 122).

6. The clamping system according to any of claims 1 to 5, wherein the metal washer (22, 122) carries retaining lugs (36) cooperating with the non-metal based washer (24, 124) to retain said non-metal based washer relative to the metal washer.

7. The clamping system according to claim 6, wherein the retaining lugs (36) are cut out in the metal washer.

8. The clamping system according to any of claims 1 to 7, wherein the non-metal based washer (22, 122) is formed from a mica-based material.

9. The clamping system according to any of claims 1 to 8, wherein the non-metal based washer (22, 122) comprises mineral particles, particularly mica or graphite, and a binder.

10. The clamping system according to any of claims 1 to 9, wherein the non-metal based washer (22, 122) comprises a reinforcement, particularly a metal reinforcement.

11. The clamping system according to any of claims 1 to 10, wherein the metal washer (22) has an annular bulge (22A) on a first face of said metal washer and the non-metal based washer (22) is disposed against said first face.

12. The clamping system according to claim 11, wherein the non-metal based washer (24, 124) has an annular bulge (24A, 123A) on a first face of said non-metal based washer and said first faces of the metal washer and of the non-metal based washer are disposed against each other, so that the annular bulges are in contact.

13. The clamping system according to claim 12, wherein the non-metal based washer (124) also has an annular bulge (123B) on its second face and said annular bulges of the non-metal based washer optionally delimit together an annular space (124').

14. The clamping system according to any of claims 1 to 13, wherein the annular sealing portion (21) further comprises an additional non-metal based washer (26) fixed to the metal washer (22), so that the metal washer is located between the non-metal based washer and the additional non-metal based washer.
